# EUROPÄISCHE PATENTSCHRIFT

(11) **EP 0 892 157 B1**
(45) Veröffentlichungstag und Bekanntmachung des Hinweises auf die Patenterteilung: **24.10.2001**
(21) Anmeldenummer: 98112427.4
(22) Anmeldetag: 04.07.1998
(51) Int. Cl.: F02D 41/02, F01N 3/08, F02B 37/00, F02M 25/07

(54) **Mehrzylindrige, luftverdichtende Einspritzbrennkraftmaschine**
Multi-cylinder compression-ignition internal combustion engine with fuel injection
Moteur à combustion interne multicylindre à injection et à allumage par compression d'air

(30) Priorität: 16.07.1997 DE 19730403
(43) Veröffentlichungstag der Anmeldung: 20.01.1999
(73) Patentinhaber: DaimlerChrysler AG, 70567 Stuttgart (DE)
(72) Erfinder: Digeser, Steffen, 70734 Fellbach (DE); Duvinage, Frank, Dr., 73230 Kirchheim (DE); Friess, Walter, 70597 Stuttgart (DE); Funk, Alexander, 71384 Weinstadt-Endersbach (DE); Kerckhoff, Anton, 70374 Stuttgart (DE); Krutzsch, Bernd, Dr., 73770 Denkendorf (DE); Scharr, Detlef, 71336 Waiblingen (DE); Weibl, Michel, Dr., 70619 Stuttgart (DE); Wenninger, Günter, 70599 Stuttgart (DE)

(56) Entgegenhaltungen:
- EP-A- 0 598 916
- EP-A- 0 621 400
- EP-A- 0 889 220
- DE-A- 19 620 780
- US-A- 4 179 892
- PATENT ABSTRACTS OF JAPAN vol. 018, no. 579 (M-1698), 7. November 1994 (1994-11-07) & JP 06 212961 A (TOYOTA MOTOR CORP), 2. August 1994 (1994-08-02)

## Beschreibung

Die Erfindung betrifft eine mehrzylindrige, luftverdichtende Einspritzbrennkraftmaschine mit den Merkmalen nach dem Oberbegriff von Anspruch 1.

Luftverdichtende Einspritzbrennkraftmaschinen werden in der Regel mit einem hohen Luftüberschuß betrieben, d.h. es besteht eine magere Gemischqualität, bei der das Verhältnis Lambda der tatsächlichen Luftmenge zur Luftmenge, die zur Verbrennung der jeweiligen Kraftstoffmenge erforderlich ist, größer eins ist. Bei einer Kraftstoffverbrennung mit hohem Luftüberschuß und hohen Temperaturen entsteht ein hoher Stickoxidanteil im Abgas.

Es ist u.a. aus der EP 0 598 916 A1 bekannt, das Stickoxid zu vermindern, indem es zunächst in einem Adsorberkatalysator gespeichert und in zyklisch folgenden Regenerationsphasen desorbiert und reduziert wird. In den Regenerationsphasen, die in der Regel deutlich kürzer dauern als die Adsorbtionsphasen, ist vor dem Stickoxid-Adsorberkatalysator ein Abgas erforderlich, das reduzierende Bedingungen an den aktiven Oberflächen der Abgasnachbehandlungseinrichtung sicherstellt. Dazu wird in der Regel sauerstoffreies und mit Kohlenwasserstoff angereichertes Abgas verwendet.

Um bei einer luftverdichtenden Einspritzbrennkraftmaschine bei gegebenem und konstant gehaltenem Betriebspunkt ein sauerstoffreies Abgas zu erhalten, muß bereits die Verbrennung auf ein minimales Luft-Kraftstoffverhältnis angelegt werden. Dieses wird in der Regel durch eine bewußte Verschlechterung des spezifischen Kraftstoffverbrauchs erreicht, indem die eingespritzte Kraftstoffmasse angehoben und gleichzeitig die Luftmasse der Zylinderladung abgesenkt wird. Es ist aus der EP 0 621 400 A1 bekannt, die Kraftstoffmasse dadurch anzuheben, daß zu einem späten Zeitpunkt Kraftstoff nacheingespritzt wird und damit eine späte Lage der Verbrennung erzielt wird. Die Luftmasse der Zylinderladung kann vermindert werden, indem die Verbrennungsluft und/oder der Abgasstrom gedrosselt wird und/oder ein Teil des Abgases in die Ansaugleitung zurückgeführt wird. Die Abgasrückführeinrichtung ersetzt bei einem Teil der Zylinderfüllung die Frischluft mit einem 21 % Sauerstoffanteil durch Abgas mit einem niedrigeren Sauerstoffgehalt. Zu diesem Zweck sollte die Abgasrückführungsrate, d.h. das Verhältnis von zurückgeführtem Abgas zur Gesamtladung im Zylinder bzw. das Verhältnis zwischen Frischluft und Restgas im Zylinder möglichst hoch liegen. Je nach Betriebspunkt werden in der Praxis Abgasrückführungsraten von über 40 % erreicht.

Um die reduzierende Wirkung des Abgases zu verstärken, ist es zweckmäßig den Gehalt an Reduktionsmitteln anzuheben, z.B. an Kohlenwasserstoffen, die aus dem Dieselkraftstoff gewonnen werden. Ganz allgemein kann dies dadurch erzielt werden, daß mehr Kraftstoff in die Zylinder eingespritzt wird, als durch die Luftladung verbrannt werden kann. Es ist ferner aus der genannten EP 0 621 400 bei luftverdichtenden Einspritzbrennkraftmaschinen bekannt, zu diesem Zweck einen Teil des Kraftstoffs nach der Haupteinspritzung verspätet einzuspritzen. Durch die späte Einspritzung wird der Anteil an unverbrannten Kohlenwasserstoffen im Abgas wesentlich erhöht.

Wenn mit Kohlenwasserstoff angereichertes Abgas durch die Abgasrückführeinrichtung zur Ansaugluft zugemischt wird, verkürzt sich allerdings nach dem Zündbeginn der Haupteinspritzung grundsätzlich der Zündverzug und verlagert sich der Schwerpunkt der Verbrennung hauptsächlich deshalb in Richtung früher. Dadurch wird die gewünschte Wirkung einer späten Verbrennungslage teilweise wieder zunichte gemacht.

Aus der nicht vorveröffentlichten EP 0889220 A ist bereits eine mehrzylindrige, luftverdichtende Einspritzbrennkraftmaschine mit einem Stickoxid-Katalysator und einer Abgasrückführeinrichtung bekannt, bei der die Abgasrohre der Zylinder in zwei Fluten aufgeteilt sind, die mindestens über eine Strecke voneinander getrennt verlaufen, wobei ausschließlich in einem Zylinder, der der einen Flut zugeordneten ist, zeitweise zur Stickoxid-Desorbierung eine erhöhte Kohlenwasserstoffemission erzeugt wird, während die andere Flut, welche den restlichen Zylindern zugeordnet ist, über die Abgasrückführeinrichtung mit der Luftansaugleitung der Brennkraftmaschine verbunden ist.

Der Erfindung liegt die Aufgabe zugrunde, bei einer luftverdichtenden Einspritzbrennkraftmaschine mit einer Abgasrückführeinrichtung den Kohlenwasserstoffanteil im Abgas durch Nacheinspritzung zu erhöhen und den Sauerstoffanteil zu verringern. Sie wird gemäß der Erfindung durch die Merkmale des Anspruchs 1 gelöst. Weitere Ausgestaltungen ergeben sich aus den Unteransprüchen.

Nach der Erfindung werden die Abgase einiger Zylinder ausschließlich für die Abgasrückführeinrichtung verwendet, während in den übrigen Zylinder zeitweise eine erhöhte Kohlenwasserstoffemission erzeugt wird. Die Abgase werden entsprechend getrennt voneinander auf Abgasrohre mit mindestens zwei Fluten aufgeteilt. Die Trennung der beiden Abgasströme ist mindestens bis zur Abgasrückführeinrichtung aufrecht zu erhalten, so daß kein mit Kohlenwasserstoff angereichertes Abgas in die Ansaugleitung der Brennkraftmaschine gelangt. Dadurch ist gewährleistet, daß die Wirkung einer überdosierten bzw. verspä teten Kraftstoffeinspritzung nicht durch eine verfrühte Zündung wieder aufgehoben wird.

Zweckmäßigerweise wird die Kohlenwasserstoffemission durch eine unvollkommene Verbrennung in den betreffenden Zylindern erreicht, indem von einer Motorelektronik gesteuert ein Kraftstoffüberschuß und/oder ein Teil des Kraftstoffs verspätet eingespritzt wird.

Bei Brennkraftmaschinen mit einem Abgasturbolader ist es zweckmäßig, die Fluten der Abgasrohre bis zu dem Turbinengehäuse getrennt zu führen, das zweckmäßigerweise zweitflutig ausgeführt ist. Erst im Zusammenströmraum der Abgasturbine wird der mit Kohlenwasserstoff angereicherte Abgasstrom mit dem Abgasstrom der anderen Flut zusammengeführt, der nicht für die Abgasrückführeinrichtung verwendet wurde.

Um den Effekt einer Stoßaufladung optimal nutzen zu können, ist es zweckmäßig, daß Zylinder mit einem maximalen Zündabstand zu einer Flut zusammengefaßt sind.

Wird die Anzahl der Zylinder auf zwei Fluten gleichmäßig verteilt, ist die Abgasrückführungsrate je nach verfügbarem Druckgefälle auf maximal 50 % begrenzt. Eine höhere Abgasrückführungsrate bzw. eine größere, mit Kohlenwasserstoff angereicherte Abgasmenge kann durch eine ungleiche Aufteilung der Zylinder auf die Fluten erreicht werden.

Um das Verhältnis zwischen der Abgasrückführungsrate und der mit Kohlenwasserstoff angereicherten Abgasmenge entsprechend den Betriebsbedingungen anpassen zu können, ist es zweckmäßig, mehr als zwei Fluten vorzusehen, von denen mindestens eine wechselweise ausschließlich Zylindern für die Abgasrückführung ohne Anreicherung mit Kohlenwasserstoff oder ausschließlich Zylindern mit zeitweiser Anreicherung mit Kohlenwasserstoff zugeordnet wird. Durch eine mehrflutige Ausführung wird zudem der Stoßaufladungseffekt verbessert.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

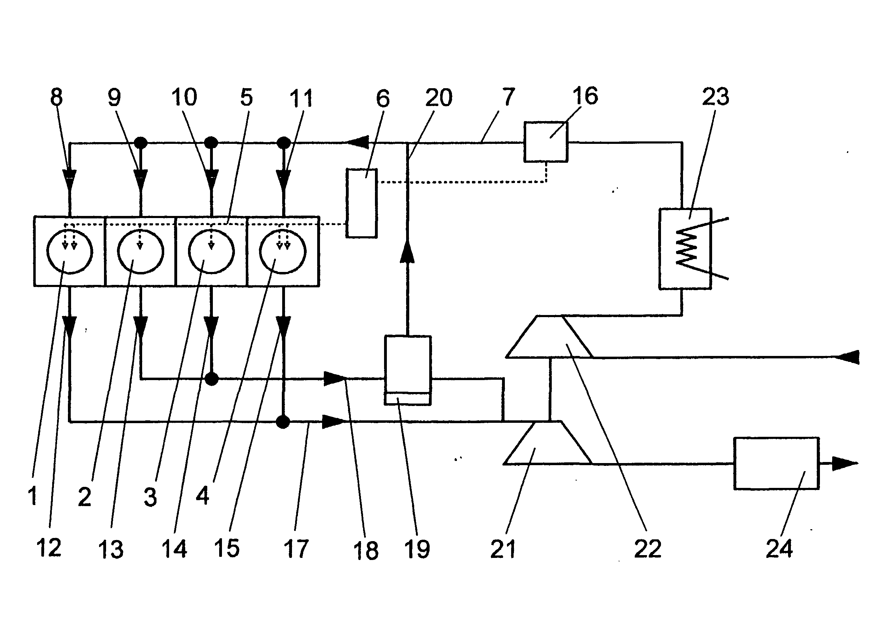

In der Zeichnung ist ein Ausführungsbeispiel der Erfindung dargestellt. Die Zeichnung zeigt schematisch eine mehrzylindrige, luftverdichtende Einspritzbrennkraftmaschine.

Die gezeigte luftverdichtende Einspritzbrennkraftmaschine hat einen ersten bis vierten Zylinder 1-4, denen über eine Kraftstoffeinspritzvorrichtung 5 mit einer elektronischen Steuereinrichtung 6 entsprechend den Betriebsbedingungen und Betriebsparametern Kraftstoff zugeführt wird. Ein Verdichter 22 eines Abgasturboladers, dessen Abgasturbine mit 21 bezeichnet ist, fördert über einen Ladeluftkühler 23 und eine Ansaugleitung 7, von der Ansaugstutzen 8-11 abzweigen, Verbrennungsluft in die Zylinder 1-4. Die Menge der angesaugten Luft kann über eine Drosseleinrichtung 25 durch die Steuereinrichtung 6 entsprechend vorgegebener Parameter und entsprechenden Kennfeldern verändert werden.

Von den Zylindern 1-4 führen Abgasrohre 12-15, von denen die Abgasrohre 12 und 15 zu einer ersten Flut 17 und die Abgasrohre 13 und 14 zu einer zweiten Flut 18 zusammengeführt sind. Die erste Flut 17 und die zweite Flut 18 sind bis zur Abgasturbine 21 getrennt geführt, die ein zweiflutiges Turbinengehäuse aufweist. Dadurch kann die Abgasturbine 21 im Teillastbereich der Brennkraftmaschine mit einem besseren Wirkungsgrad im Stoßbetrieb betrieben werden. Hierzu ist es günstig, wenn die Zylinder mit maximalen Zündabständen zu jeweils einer Flut 17, 18 zusammengefaßt sind. Bei einer übliche Zündfolge für vier Zylinder 1-4 in Reihenanordnung sind das der erste Zylinder 1 und der vierte Zylinder 4 bzw. der zweite Zylinder 2 und der dritte Zylinder 3, wie es im Ausführungsbeispiel dargestellt ist.

In der zweiten Flut 18 ist vor der Abgasturbine 21 eine Abgasrückführeinrichtung 19 vorgesehen, über die Abgas durch die Abgasrückführleitung 20 in die Ansaugleitung 7 geleitet wird. Die Abgasrückführeinrichtung 19 und die Drosseleinrichtung 16 dienen dazu, die Qualität des Kraftstoffgemisches in den Zylindern 1-4 zu verändern. Durch einen Kraftstoffüberschuß, ein fettes Gemisch mit Lambda kleiner 1, kann der Sauerstoff im Abgas reduziert werden und gleichzeitig der Kohlenwasserstoffanteil im Abgas erhöht werden. Dieser Effekt wird ferner dadurch verstärkt, daß ein Teil des Kraftstoffes nach der Haupteinspritzung verspätet in die Zylinder 1-4 eingespritz wird.

Der Abgas der Brennkraftmaschine wird schließlich einem Stickoxid-Adsorberkatalysator 24 zugeführt.In diessem wird das Stickoxid während der normalen Betriebsphase der Brennkraftmaschine gespeichert. Das Stickoxid bildet sich insbesondere bei hohem Luftüberschuß und hohen Temperaturen. In zyklischen Abständen wird der Stickoxid-Adsorberkatalysator 24 regeneriert, indem das Stickoxid desorbiert und mit einem reduzierend wirkenden Abgas reduziert wird.

Nach der Erfindung wird ein reduzierendesAbgas mit einem erhöhten Kohlenwasserstoffanteil während der Regenerationsphasen in den Zylindern 1 und 4 erzeugt, indem durch die Steuereinrichtung 6 vermehrt Kraftstoff und/oder ein Teil des Kraftstoffs verspätet eingespritzt wird. Damit ein erhöhter Kohlenwasserstoffanteil im Abgas nicht dazu führt, daß durch die Abgasrückführung in die Ansaugleitung 7 die gewünschte verspätete Zündung des Kraftstoffs teilweise wieder aufgehoben wird, werden die Zylinder 2 und 3 mit einer normalen Kraftstoffeinspritzung betrieben und ihr Abgas ausschließlich über die zweite Flut 18 zur Abgasrückführung verwendet. Das für die Abgasrückführung nicht benötigte Abgas dieser beiden Zylinder 2 und 3 wird dann in der Abgasturbine 21 dem übrigen Abgas der ersten Flut 17 beigemischt.

## Patentansprüche

1. Mehrzylindrige, luftverdichtende Einspritzbrennkraftmaschine mit einem Stickoxid-Adsoberkatalysator (24) und einer Abgasrückführeinrichtung (19), wobei
Abgasrohre (12, 13, 14, 15) der Zylinder (1, 2, 3, 4) in mindestens zwei Fluten (17, 18) gleichmäßig aufgeteilt sind, die mindestens über eine Strecke voneinander getrennt verlaufen, und wobei ausschließlich in den Zylindern (1, 4) einer Flut (17) zeitweise zur Stickoxid-Desorbierung eine erhöhte Kohlenwasserstoffemission erzeugt wird, während eine andere Flut (18) über die Abgasrückführeinrichtung (19) mit der Luftansaugleitung (7) der Brennkraftmaschine verbunden ist.

2. Brennkraftmaschine nach Anspruch 1,
**dadurch gekennzeichnet,**
**daß** die Kohlenwasserstoffemission durch eine fettes Kraftstoffgemisch und/oder eine verspätete Teileinspritzung erhöht wird.

3. Brennkraftmaschine nach Anspruch 1 oder 2,
**dadurch gekennzeichnet,**
**daß** die Fluten (17, 18) bis zu einem Abgasturbolader mit einem zweiflutigen Turbinengehäuse getrennt geführt sind und erst im Zuströmraum der Abgasturbine (21) zusammengeführt werden.

4. Brennkraftmaschine nach Anspruch 3,
**dadurch gekennzeichnet,**
**daß** die Zylinder (1, 4) mit einem maximalen Zündabstand zu einer Flut (17) zusammengefaßt sind.

5. Brennkraftmaschine nach einem der vorhergehenden Ansprüche,
**dadurch gekennzeichnet,**
**daß** mehr als zwei Fluten (17, 18) vorgesehen sind, von denen mindestens eine wechselweise ausschließlich Zylindern für die Abgasrückführung ohne erhöhten Kohlenwasserstoffanteil oder ausschließlich Zylindern mit zeitweise erhöhter Kohlenwasserstoffemission zugeordnet wird.

## Claims

1. A multi-cylinder, air compression fuel injected internal combustion engine with a nitrous oxide adsorption catalytic converter (24) and an exhaust gas recirculation system (19) with the exhaust pipes (12, 13, 14, 15) of the cylinders (1, 2, 3, 4) being evenly divided into at least two flows (17, 18) which run separately from one another along at least one section, and with increased hydrocarbon emissions being generated for a period for nitrous oxide desorption exclusively in the cylinders (1, 4) of one flow (17), while another flow (18) is connected to the air intake line (7) of the internal combustion engine via the exhaust gas recirculation system (19).

2. An internal combustion engine in accordance with claim 1,
**characterised in that**
hydrocarbon emissions are increased by means of a rich fuel mixture and/or delayed partial injection.

3. An internal combustion engine in accordance with claim 1 or 2,
**characterised in that**
the flows (17, 18) run separately as far as a turbocharger with a double-flow turbine housing and do not run together until they reach the feed chamber of the exhaust gas turbine (21).

4. An internal combustion engine in accordance with claim 3,
**characterised in that**
the cylinders (1, 4) are combined in one flow (17) with a maximum firing interval.

5. An internal combustion engine in accordance with one of the preceding claims,
**characterised in that**
more than two flows (17, 18) are provided at least one of which is allocated alternately exclusively to cylinders for exhaust gas recirculation without increased hydrocarbon emissions or exclusively to cylinders with increased hydrocarbon emissions for a period.

## Revendications

1. Moteur à combustion à injection suralimenté à plusieurs cylindres, avec un catalyseur d'adsorption de l'oxyde d'azote (24) et un dispositif de recirculation des gaz d'échappement (19), où
les tubes de gaz d'échappement (12, 13, 14, 15) des cylindres (1, 2, 3, 4) sont répartis régulièrement en au moins deux flux (17, 18), qui s'étendent séparément les uns des autres au moins sur une distance, et où exclusivement dans les cylindres (1, 4) d'un flux (17) est générée par moments une émission augmentée d'hydrocarbures en vue d'une désorption de l'oxyde d'azote, tandis qu'un autre flux est relié, par un dispositif de recirculation des gaz d'échappement (19), à la conduite d'aspiration d'air (7) du moteur à combustion interne.

2. Moteur à combustion selon la revendication 1,
**caractérisé en ce que**
l'émission d'hydrocarbures est augmentée par le biais d'un mélange en carburant riche et/ou d'une injection partielle retardée.

3. Moteur à combustion selon la revendication 1 ou 2,
**caractérisé en ce que**
les flux (17, 18) sont guidés séparément jusqu'à un turbocompresseur entraîné par les gaz d'échappement, ayant un carter de turbine à deux flux, et sont ensuite regroupés dans l'enceinte d'alimentation de la turbine à gaz d'échappement (21).

4. Moteur à combustion selon la revendication 3,
**caractérisé en ce que**
les cylindres (1, 4), dont l'intervalle entre les allumages est maximal, sont regroupés en un flux (17).

5. Moteur à combustion selon l'une des revendications précédentes,
**caractérisé en ce que**
l'on prévoit plus de deux flux (17, 18), dont au moins l'un est associé alternativement exclusivement à des cylindres pour effectuer la recirculation des gaz d'échappement sans augmentation de la teneur en hydrocarbures, ou exclusivement à des cylindres pour lesquels une augmentation de l'émission d'hydrocarbures est effectuée par moments.
